# EUROPEAN PATENT APPLICATION

(11) **EP 4 604 490 A1**
(43) Date of publication of application: **20.08.2025**
(21) Application number: 22962105.7
(22) Date of filing: 14.10.2022
(51) Int. Cl.: H04L 67/00

(54) **METHOD FOR COMMUNICATING AMONG PLURALITY OF DEVICES OF POWER CONVERSION SYSTEM, AND POWER CONVERSION SYSTEM**

(71) Applicant: MITSUBISHI ELECTRIC CORPORATION, Chiyoda-ku Tokyo 100-8310 (JP)
(72) Inventor: IDO, Yasunori, Tokyo 100-8310 (JP)
(74) Representative: Witte, Weller & Partner Patentanwälte mbB
(86) International application number: PCT/JP2022/038389
(87) International publication number: WO 2024/079887

(57) **Abstract**

A method for communication between a plurality of devices of a power conversion system includes synchronizing, in time, N devices (N is a natural number of two or more) with each other so as to make a control period common to the N devices. The control period includes at least one control data communication duration, and the control data communication duration includes N time slots. The method for communication includes a control data communication step in which, in an i-th time slot (i = 1 to N), an i-th device among the N devices transmits control data by multicast and other devices among the N devices receive the control data.

## Description

### TECHNICAL FIELD

The present disclosure relates to a method for communication between a plurality of devices of a power conversion system, and to the power conversion system.

### BACKGROUND ART

A data communication system based on priority has been known. For example, PTL 1 discloses that a wireless mobile station determines, based on a transmission buffer amount for untransmitted data and a priority for each datum, the number of allocated wireless resources to be used by untransmitted data for each priority, and determines the number of allocated wireless resources for untransmitted data of the wireless mobile station device in such a manner that at least one wireless resource is allocated in one wireless frame for every priority.

### CITATION LIST

### PATENT LITERATURE

PTL 1: Japanese Patent Laying-Open No. 2015-156594

### SUMMARY OF INVENTION

### TECHNICAL PROBLEM

For communication between a plurality of devices of a power conversion system, it is required to ensure real-time communication, i.e., ensure that communication of control data, i.e., data to be used for control, having a high priority is completed within a specified time. For example, a control process for a self-excited HVDC (High Voltage Direct Current) system requires a quick control response so as to stably control the DC power system, and therefore requires the control period to be shortened as compared with control of an AC power system. In the case where a plurality of controllers cooperatively perform the control process, it is necessary to complete, within one control period, a process of transmitting and receiving data necessary for control between these controllers and a control calculation process based on the received data. Therefore, for communication of control data between these controllers, the real-time performance is required to reliably complete the transmission and reception of the control data within a specified time of one control period (within a sufficiently short time that does not interfere with the control calculation process).

The communication system disclosed in PTL 1 relies on best effort, and therefore cannot ensure the real-time performance.

In view of the above, an object of the present disclosure relates to a communication method between a plurality of devices of a power conversion system and to the power conversion system that can ensure the real-time performance for communication of control data having a high priority.

### SOLUTION TO PROBLEM

A method for communication between a plurality of devices of a power conversion system according to the present disclosure includes: synchronizing, in time, N devices (N is a natural number of two or more) with each other so as to make a control period common to the N devices. The control period includes at least one control data communication duration, and the control data communication duration includes N time slots. The method for communication includes a control data communication step in which, in an i-th time slot (i = 1 to N), an i-th device among the N devices transmits control data by multicast and other devices among the N devices receive the control data.

### ADVANTAGEOUS EFFECTS OF INVENTION

According to the present disclosure, in an i-th time slot (i = 1 to N), an i-th device among N devices transmits control data by multicast and the other devices among the N devices receive the control data. Thus, the real-time performance for the control data having a high priority can be ensured.

### BRIEF DESCRIPTION OF DRAWINGS

Fig. 1 is a schematic configuration diagram of a power conversion system.
Fig. 2 is a schematic configuration diagram of a power conversion device 1 and its peripheral circuitry.
Fig. 3 is a circuit diagram showing an example of a unit converter (submodule).
Fig. 4 is a diagram showing a control period according to Embodiment 1.
Fig. 5 is a diagram showing communication packets transmitted in a time slot i (i =1 to N) according to Embodiment 1.
Fig. 6 is a diagram showing a structure of a communication packet.
Fig. 7 is a diagram for illustrating software processing.
Fig. 8 is a diagram showing a priority management table for communication data transmitted from a converter controller 200 during first communication.
Fig. 9 is a diagram showing a priority management table for communication data transmitted from a unit converter 7 during first communication.
Fig. 10 is a diagram showing a priority management table for communication data transmitted from a host controller 300 during second communication.
Fig. 11 is a diagram showing a priority management table for communication data transmitted from converter controller 200 during second communication.
Fig. 12 is a diagram showing a priority management table for communication data transmitted from host controller 300 during third communication.
Fig. 13 is a flowchart illustrating a communication procedure for the power conversion system according to Embodiment 1.
Fig. 14 is a diagram showing a control period according to Embodiment 2.
Fig. 15 is a diagram showing communication packets transmitted in a time slot i (i = 1 to N) of a first control data communication time slot (1) and a time slot i (i = 1 to N) of a second control data communication time slot (2).
Fig. 16 is a flowchart illustrating a communication procedure for a power conversion system according to Embodiment 2.
Fig. 17 is a diagram showing communication packets transmitted in a time slot i (i = 1 to N) according to Embodiment 3.
Fig. 18 is a flowchart illustrating a communication procedure for a power conversion system according to Embodiment 3.

### DESCRIPTION OF EMBODIMENTS

Embodiments of the present invention are described hereinafter with reference to the drawings. In the following description, the same components are denoted by the same reference characters. They are named identically and function identically as well. Therefore, a detailed description thereof is not herein repeated.

### Embodiment 1.

### [Configuration of Power Conversion System]

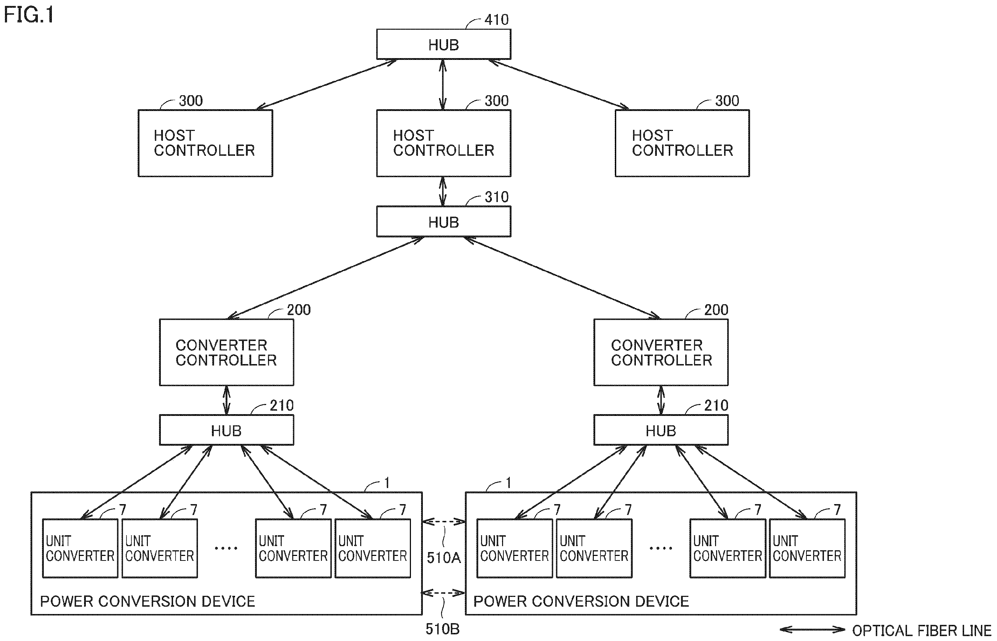

Fig. 1 is a schematic configuration diagram of a power conversion system.

The power conversion system includes a plurality of host controllers 300, a plurality of converter controllers 200, and a plurality of power conversion devices 1.

Two power conversion devices 1 constitute a two-terminal HVDC system with respective DC terminals connected by DC power transmission lines 510A and 510B.

Power conversion device 1 includes a plurality of unit converters 7.

One converter controller 200 and a plurality of unit converters 7 included in one power conversion device 1 are connected by optical fiber lines via a HUB 210. Converter controller 200 controls a plurality of unit converters 7 in one power conversion device 1.

One host controller 300 and two converter controllers 200 are connected by optical fiber lines via a HUB 310. Host controller 300 controls these two converter controllers 200.

The plurality of host controllers 300 are connected by optical fiber lines via a HUB 410.

A communication system for communication via HUB 210 between one converter controller 200 and a plurality of unit converters 7 included in one power conversion device 1, a communication system for communication via HUB 310 between one host controller 300 and two converter controllers 200, and a communication system for communication via HUB 410 between a plurality of host controllers 300 ensure real-time communication of control data. A detailed description of the communication systems is given later herein.

### [Configuration of Power Conversion Device]

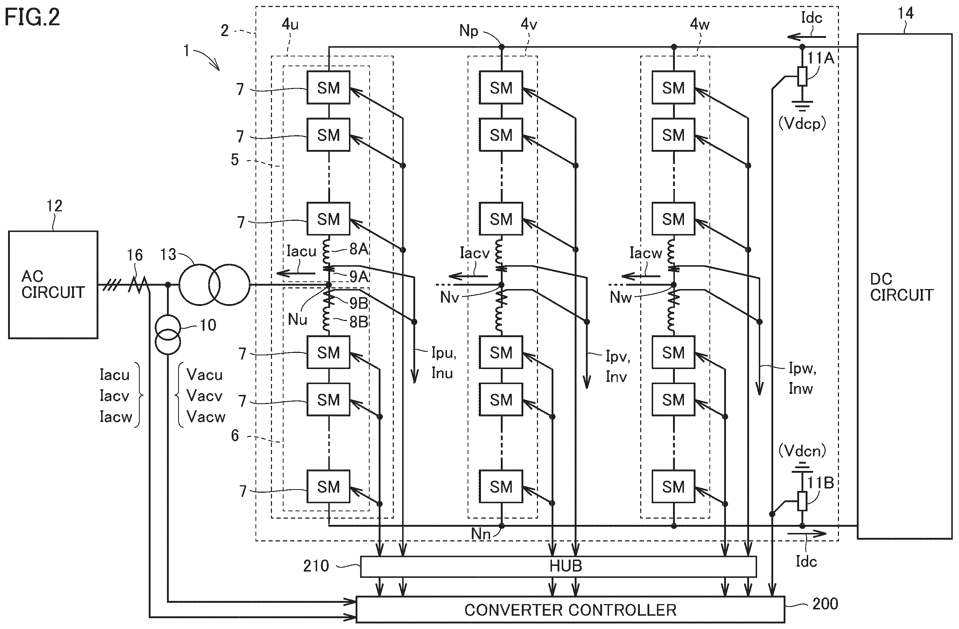

Fig. 2 is a schematic configuration diagram of power conversion device 1 and its peripheral circuitry. Power conversion device 1 is configured in the form of a modular multilevel converter including a plurality of submodules (corresponding to "SM" in Fig .2) 7 connected in series to each other. "Submodule" is also called "converter cell" or "unit converter." Power conversion device 1 performs power conversion between a DC circuit 14 and an AC circuit 12. Specifically, power conversion device 1 includes power conversion circuitry 2.

Power conversion circuitry 2 includes a plurality of leg circuits 4u, 4v, 4w (hereinafter also referred to collectively as "leg circuit 4") connected in parallel with each other between a positive DC terminal (i.e., high-potential-side DC terminal) Np and a negative DC terminal (i.e., low-potential-side DC terminal) Nn.

Leg circuit 4 is provided for each of a plurality of phases of AC. Leg circuit 4 is connected between AC circuit 12 and DC circuit 14 for performing power conversion between the AC circuit and the DC circuit. AC circuit 12 shown in Fig. 2 is a three-phase AC system, and three leg circuits 4u, 4v, 4w are arranged for U phase, V phase, W phase, respectively.

AC input terminals Nu, Nv, Nw arranged respectively in leg circuits 4u, 4v, 4w are each connected through an interconnection transformer 13 to AC circuit 12. AC circuit 12 is an AC power system including an AC power source, for example. Fig. 2 does not show connection between AC input terminals Nv, Nw and interconnection transformer 13 for the sake of simplifying illustration in the drawing.

High-potential-side DC terminal Np and low-potential-side DC terminal Nn that are connected commonly to leg circuits 4 are connected to DC circuit 14. DC circuit 14 is a DC terminal for a DC power system including a DC transmission network or the like, or a DC terminal for another power conversion device, for example.

The leg circuits may be connected to AC circuit 12 through an interconnection reactor, instead of interconnection transformer 13 in Fig. 2. Further, instead of AC input terminals Nu, Nv, Nw, primary windings may be arranged in respective leg circuits 4u, 4v, 4w, and AC connection from leg circuits 4u, 4v, 4w to interconnection transformer 13 or the interconnection reactor may be implemented through secondary windings magnetically coupled with the respective primary windings. In this case, the primary windings may be reactors 8A, 8B as described below. Specifically, electrical connection (namely DC or AC connection) from leg circuit 4 to AC circuit 12 may be implemented through connecting parts such as AC input terminals Nu, Nv, Nw or the aforementioned primary windings arranged in respective leg circuits 4u, 4v, 4w.

Leg circuit 4u includes an upper arm 5 from high-potential-side DC terminal Np to AC input terminal Nu, and a lower arm 6 from low-potential-side DC terminal Nn to AC input terminal Nu. A connection point, i.e., AC terminal Nu, between upper arm 5 and lower arm 6 is connected to interconnection transformer 13. High-potential-side DC terminal Np and low-potential-side DC terminal Nn are connected to DC circuit 14. Leg circuits 4v, 4w have a similar configuration to the above-described one, and therefore, leg circuit 4u is explained below as a representative of the leg circuits.

Upper arm 5 includes a plurality of cascaded unit converters 7 and reactor 8A. These unit converters 7 and reactor 8A are connected in series to each other. Lower arm 6 includes a plurality of cascaded unit converters 7 and reactor 8B. These unit converters 7 and reactor 8B are connected in series to each other.

The position in which reactor 8A is inserted may be any position in upper arm 5 of leg circuit 4u, and the position in which reactor 8B is inserted may be any position in lower arm 6 of leg circuit 4u. More than one reactor 8A and more than one reactor 8B may be arranged. Respective inductance values of the reactors may be different from each other. Alternatively, only reactor 8A of upper arm 5, or only reactor 8B of lower arm 6 may be arranged.

Reactors 8A, 8B are arranged for preventing a sharp increase of fault current generated in the event of a fault in AC circuit 12 or DC circuit 14, for example. Excessively large inductance values of reactors 8A, 8B, however, result in a problem that the efficiency of the power converter is decreased. In the event of a fault, it is therefore preferable to stop (i.e., turn off) all switching devices in each unit converter 7 as quickly as possible.

Power conversion device 1 includes, as detectors for measuring the amount of electricity (current, voltage, for example) to be used for control, an AC voltage detector 10, an AC current detector 16, DC voltage detectors 11A, 11B, and arm current detectors 9A, 9B disposed in each leg circuit 4.

AC voltage detector 10 detects U phase AC voltage value Vacu, V phase AC voltage value Vacv, and W phase AC voltage value Vacw of AC circuit 12. AC current detector 16 detects U phase AC current value Iacu, V phase AC current value Iacv, and W phase AC current value Iacw of AC circuit 12. DC voltage detector 11A detects DC voltage value Vdcp of high-potential-side DC terminal Np connected to DC circuit 14. DC voltage detector 11B detects DC voltage value Vdcn of low-potential-side DC terminal Nn connected to DC circuit 14. Arm current detectors 9A and 9B disposed in U phase leg circuit 4u detect upper arm current Ipu flowing in upper arm 5 and lower arm current Inu flowing in lower arm 6, respectively. Likewise, arm current detectors 9A and 9B disposed in V phase leg circuit 4v detect upper arm current Ipv and lower arm current Inv, respectively. Arm current detectors 9A and 9B disposed in W phase leg circuit 4w detect upper arm current Ipw and lower arm current Inw, respectively.

Signals detected by these detectors are transmitted to converter controller 200. Converter controller 200 generates, based on these detection signals and information from unit converters 7, control data for controlling the operational state of each unit converter 7, and non-control data, i.e., data not to be used for controlling, and transmits the control data and the non-control data to unit converter 7. The control data to unit converter 7 includes a start or stop command for the unit converter, a control synchronization command for the unit converter, and an output voltage command value for the unit converter, for example.

Converter controller 200 receives control data and non-control data transmitted from host controller 300, and transmits the control data and the non-control data to unit converter 7.

Converter controller 200 receives control data and non-control data from unit converter 7, and transmits the control data and the non-control data to host controller 300.

### <Example Configuration of Unit Converter>

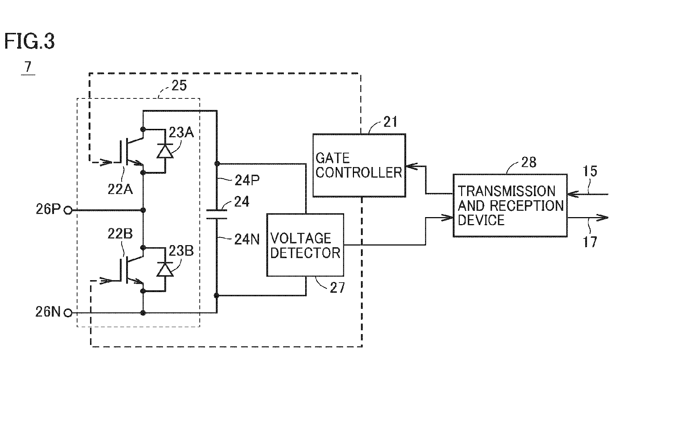

Fig. 3 is a circuit diagram showing an example of a unit converter (submodule).

Unit converter 7 includes a half-bridge-type conversion circuit 25, a capacitor 24 serving as an energy storage device, a gate controller 21, a voltage detector 27, and a transmission and reception device 28. Gate controller 21, voltage detector 27, and transmission and reception device 28 may be implemented by a dedicated circuit, or implemented by an FPGA (Field Programmable Gate Array), or the like.

Conversion circuit 25 includes switching devices 22A, 22B connected in series to each other, and diodes 23A, 23B. Diodes 23A, 23B are connected in anti-parallel (i.e., in parallel in the reverse-bias direction) with switching devices 22A, 22B, respectively. Capacitor 24 is connected in parallel with the series-connected circuit made up of switching devices 22A, 22B for holding a DC voltage. A connection node between switching devices 22A, 22B is connected to a high-potential-side input/output terminal 26P. A connection node between switching device 22B and capacitor 24 is connected to a low-potential-side input/output terminal 26N. As each of switching devices 22A, 22B, a self-arc-extinguishing-type switching device is used, of which ON operation and OFF operation can both be controlled. IGBT (Insulated Gate Bipolar Transistor) or GCT (Gate Commutated Turn-off thyristor), for example, is used as switching device 22A, 22B.

Gate controller 21 operates in accordance with control data received from converter controller 200. During a normal operation (i.e., zero voltage or a positive voltage is output between input/output terminals 26P and 26N), gate controller 21 performs control to cause one of switching devices 22A, 22B to be in the ON state and the other to be in the OFF state. While switching device 22A is in the ON state and switching device 22B is in the OFF state, a voltage across capacitor 24 is applied between input/output terminals 26P and 26N. While switching device 22A is in the OFF state and switching device 22B is in the ON state, the voltage between input/output terminals 26P and 26N is 0 V. Thus, unit converter 7 causes switching devices 22A, 22B to become the ON state alternately to thereby output zero voltage or a positive voltage depending on the voltage of capacitor 24.

Voltage detector 27 detects the voltage across DC capacitor 24 (i.e., the output voltage of unit converter 7).

Transmission and reception device 28 transmits control data sent from converter controller 200 to gate controller 21. The control data from converter controller 200 includes a start or stop command for unit converter 7, a control synchronization command for unit converter 7, and an output voltage command value for unit converter 7, for example.

Unit converter 7 can repeat control for causing switching devices 22A, 22B to become the ON state alternately, to thereby output a voltage having the magnitude of the output voltage command value for unit converter 7.

Receiving the control synchronization command for the unit converter, gate controller 21 synchronizes switching of switching device 22A with switching of switching device 22B by matching its control timing (for example, the starting point or the phase of a carrier signal for PWM control) with the control synchronization command.

Transmission and reception device 28 generates control data and non-control data and transmits the control data and the non-control data to converter controller 200. The control data to the converter controller includes a start or stop state of the unit converter, an output voltage measurement value of the unit converter, and a device state (abnormal state) of the unit converter. The non-control data includes a device state (normal state) of the unit converter.

The above-described configuration of unit converter 7 is given as one example, and unit converter 7 having any of other configurations may be applied to the present embodiment. For example, a full-bridge-type conversion circuit or a three-quarter-bridge-type conversion circuit may be used to form unit converter 7.

### [Communication System]

A communication system for communication via HUB 210 between one converter controller 200 and a plurality of unit converters 7 included in one power conversion device 1, a communication system for communication via HUB 310 between one host controller 300 and two converter controllers 200, and a communication system for communication via HUB 410 between a plurality of host controllers 300 are now described. These communication systems to be used are similar to each other.

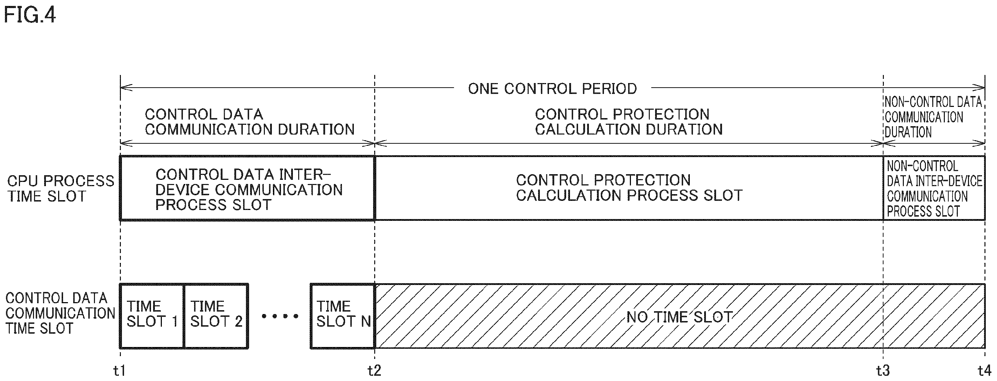

Fig. 4 is a diagram showing a control period according to Embodiment 1. The control period may be a period of several hundreds of µsec required for converter control, for example.

In Fig. 4, N represents the number of devices. A system for communication between N devices is illustrated. In the case of communication (first communication) via HUB 210 between one converter controller 200 and a plurality of unit converters 7 included in one power conversion device 1, the N devices are one converter controller 200 and a plurality of unit converters 7. In the case of communication (second communication) via HUB 310 between one host controller 300 and two converter controllers 200, the N devices are one host controller 300 and two converter controllers 200. In the case of communication (third communication) via HUB 410 between a plurality of host controllers 300, the N devices are these host controllers 300.

The N devices can have a common control period based on a time synchronization system such as IEEE 1588 or IEEE 802.1AS.

The communication system for communication between the N devices is the Publish/Subscribe type communication system. One device transmits, by multicast, control data for other devices. Each device that has received the control data extracts only control data necessary for the device itself, based on the ID.

In the control period, a control data communication duration of t1 ≤ t < t2, a control protection calculation duration of t2 ≤ t < t3, and a non-control data communication duration of t3 ≤ t < t4 are arranged in order of time from the earliest to the latest. It should be noted that t1 < t2 < t3 < t4 holds. The control data is required to be in real time. The non-control data is not required be in real time.

In the control data communication duration, the CPU process time slot is a control data inter-device communication process slot. A CPU performs a control data communication process. The control data communication time slot is a time slot for communication of control data, and is divided into N time slots i ( = 1 to N).

In the control protection calculation duration, the CPU process time slot is a control protection calculation process slot. The CPU performs a control protection calculation. The control protection calculation is a process of generating a control voltage command value for controlling the operation of each unit converter or generating a control stop command for protecting each unit converter, for example, based on the current and voltage values of the AC circuit and the DC circuit measured by current and voltage detectors 9A, 9B, 10, 11A, 11B, and 16, and the voltage value or the state value received from each unit converter.

In the non-control data communication duration, the CPU process time slot is a non-control data inter-device communication process slot. The CPU performs a non-control data communication process. No sub-slot is provided for each device for ensuring the transmission/reception time, and the CPU transmits/receives the non-control data with best effort. When the process of the control protection calculation takes a longer time, completion of the control protection calculation process may be given priority and the time length of the non-control data communication process slot may be shortened or the control period may not include the non-control data communication process slot and the subsequent control period may include the non-control data communication process slot.

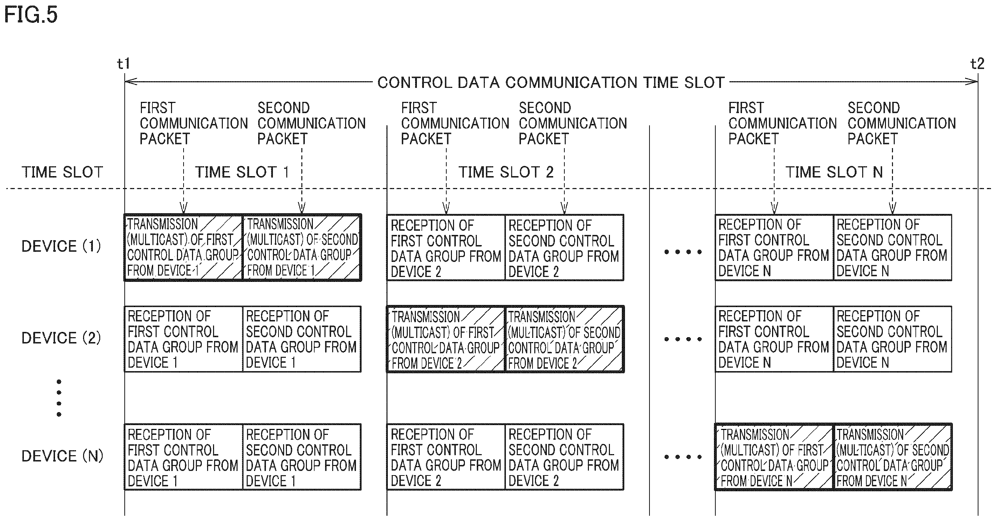

Fig. 5 is a diagram showing communication packets transmitted in a time slot i (i = 1 to N) according to Embodiment 1.

In the time slot i, the i-th device (i) transmits, by multicast, a first communication packet and a second communication packet, and the other devices (j) receive the first communication packet and the second communication packet. Here, i = 1 to N, j = 1 to N, and j ≠ i. The first communication packet includes a first control data group from the device (i). The second communication packet includes a second control data group from the device (i). Since a time slot for transmission is allocated to each device, transmission and reception between devices can be performed reliably.

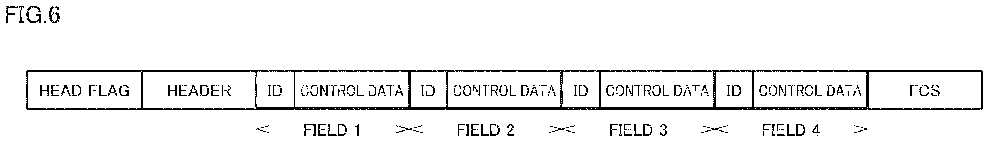

Fig. 6 is a diagram showing a structure of a communication packet.

The first communication packet includes a head flag, a header, a plurality of fields, and an FCS (frame check sequence). Each field includes a plurality of pieces of control data (ID and control data body) constituting the first control data group. The second communication packet includes a head flag, a header, a plurality of fields, and an FCS. Each field includes a plurality of pieces of control data (ID and control data body) constituting the second control data group.

The data size of the communication packet and the number of packets that can be transmitted per time slot can be set based on the device type and the allocatable time slot's time length.

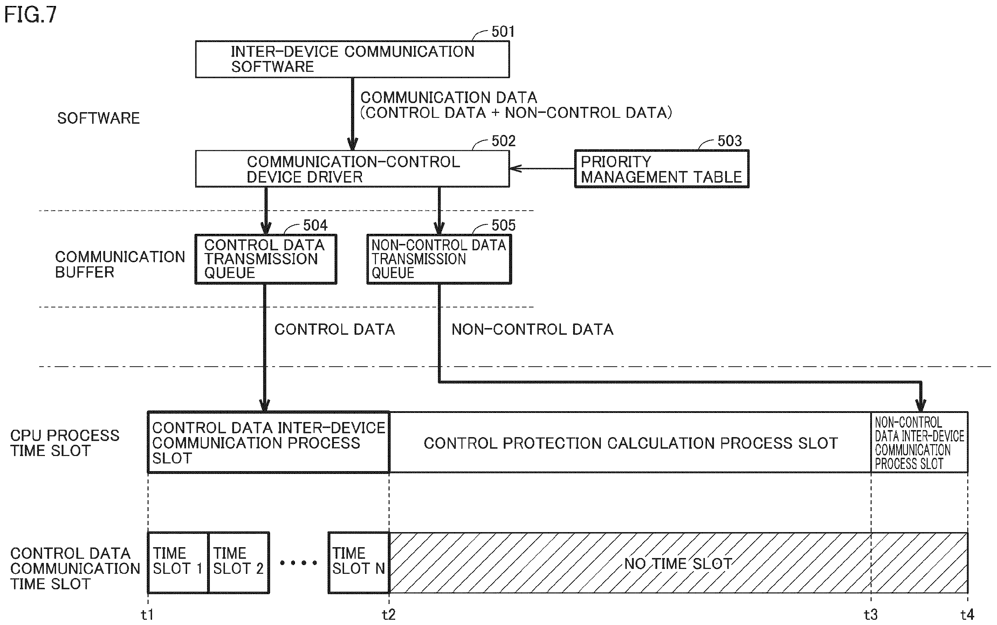

Fig. 7 is a diagram for illustrating software processing.

The CPU that performs inter-device communication software 501 transmits communication data to a communication-control device driver 502.

The CPU that performs communication-control device driver 502 classifies the communication data into control data or non-control data based on a priority management table 503. The CPU that performs communication-control device driver 502 transmits the communication data classified into the control data to a control data transmission queue 504, and transmits the communication data classified into the non-control data to a non-control data transmission queue 505. Priority management table 503 defines the priority associated with the ID of the communication data and the content of the communication data. The priority specifies the priority of the control data or the priority of the non-control data.

During the control data communication duration, the transmitting device stores, in a communication packet, the control data in control data transmission queue 504, and transmits the communication packet.

During the non-control data communication duration, the transmitting device transmits the non-control data in non-control data transmission queue 505 with best effort. Among transmission jobs (transmission data) in non-control data transmission queue 505, transmission jobs that have not been transmitted in the current control period are to be transmitted in the next control period. Thus, even when a large amount of data is included in non-control data transmission queue 505, the control period will not be lengthened, so that a fast control period can be maintained.

In the present embodiment, transmission of the control data and transmission of the non-control data can be handled within the same software, and therefore, interface processing of the software can be simplified.

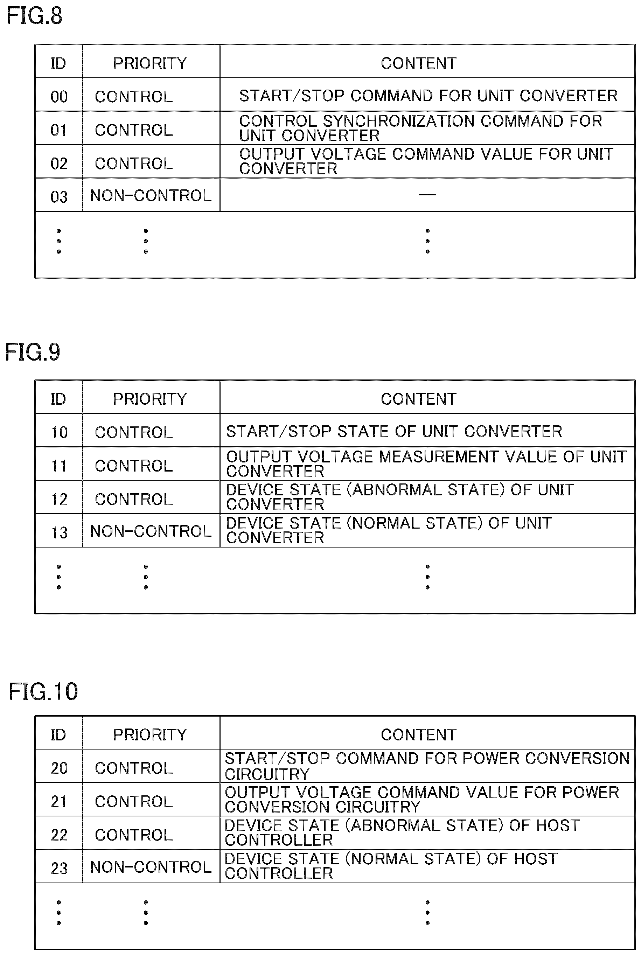

Fig. 8 is a diagram showing a priority management table for communication data transmitted from converter controller 200 during the first communication. For example, in the case of the communication data having the ID "00," the priority is the priority of control data, and the content is a start or stop command for a unit converter. In the case of the communication data having the ID "01," the priority is the priority of control data, and the content is a control synchronization command for a unit converter. In the case of the communication data having the ID "02," the priority is the priority of control data, and the content is an output voltage designation value for a unit converter.

Basically, the control data and the non-control data transmitted from converter controller 200 are determined as being necessary and extracted by all unit converters 7.

Fig. 9 is a diagram showing a priority management table for communication data transmitted from unit converter 7 during the first communication. For example, in the case of the communication data having the ID "10," the priority is the priority of control data, and the content is a start or stop state of a unit converter. In the case of the communication data having the ID "11," the priority is the priority of control data, and the content is an output voltage measurement value of a unit converter. In the case of the communication data having the ID "12," the priority is the priority of control data, and the content is an abnormal state which is a device state of a unit converter. In the case of the communication data having the ID "13," the priority is the priority of non-control data, and the content is a normal state which is a device state of a unit converter.

Basically, the control data and the non-control data transmitted from unit converter 7 are determined as being necessary and extracted by converter controller 200.

Fig. 10 is a diagram showing a priority management table for communication data transmitted from host controller 300 during the second communication. For example, in the case of the communication data having the ID "20," the priority is the priority of control data, and the content is a start or stop command for the power conversion circuitry. In the case of the communication data having the ID "21," the priority is the priority of control data, and the content is an output voltage designation value for the power conversion circuitry. In the case of the communication data having the ID "22," the priority is the priority of control data, and the content is an abnormal state which is a device state of the host controller. In the case of the communication data having the ID "23," the priority is the priority of non-control data, and the content is a normal state which is a device state of the host controller.

Basically, the control data and the non-control data transmitted from host controller 300 are determined as being necessary and extracted by converter controller 200.

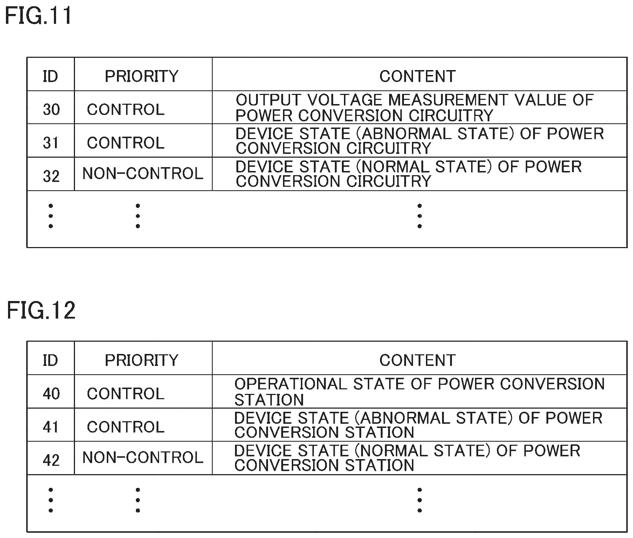

Fig. 11 is a diagram showing a priority management table for communication data transmitted from converter controller 200 during the second communication.

For example, in the case of the communication data having the ID "30," the priority is the priority of control data, and the content is an output voltage measurement value of the power conversion circuitry. In the case of the communication data having the ID "31," the priority is the priority of control data, and the content is an abnormal state which is a device state of the power conversion circuitry. In the case of the communication data having the ID "32," the priority is the priority of non-control data, and the content is a normal state which is a device state of the power conversion circuitry.

Basically, the control data and the non-control data transmitted from converter controller 200 are determined as being necessary and extracted by host controller 300.

Fig. 12 is a diagram showing a priority management table for communication data transmitted from host controller 300 during the third communication.

For example, in the case of the communication data having the ID "40," the priority is the priority of control data, and the content is an operational state of a power conversion station equipped with the host controller. In the case of the communication data having the ID "41," the priority is the priority of control data, and the content is an abnormal state which is a device state of the power conversion station. In the case of the communication data having the ID "42," the priority is the priority of non-control data, and the content is a normal state which is a device state of the power conversion station.

Basically, the control data and the non-control data transmitted from host controller 300 are determined as being necessary and extracted by other host controllers 300.

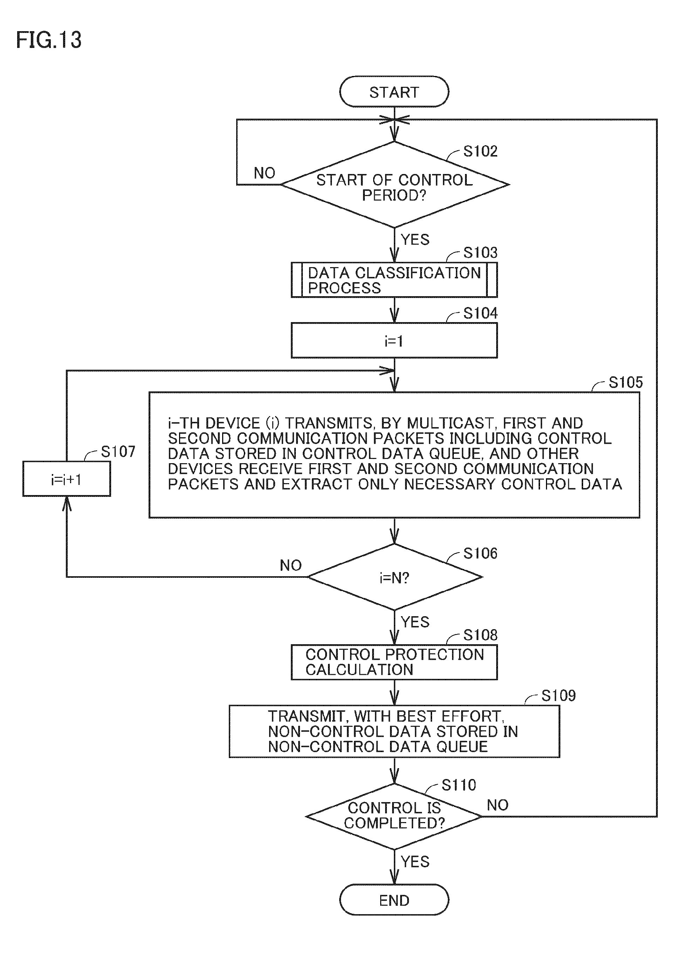

Fig. 13 is a flowchart illustrating a communication procedure for the power conversion system according to Embodiment 1.

It is supposed that devices are synchronized in time with each other at regular time intervals. Specifically, in order to have a control period common to N (N is a natural number of two or more) devices, the N devices are synchronized in time with each other by a time synchronization system such as IEEE 1588 or IEEE 802.1AS.

When the time of the start of the control period is reached in step S102, the process proceeds to step S103.

In step S103, the N devices classify communication data into control data or non-control data based on priority management table 503, during the control data communication duration. The N devices transmit the communication data classified into the control data to control data transmission queue 504, and transmit the communication data classified into the non-control data to non-control data transmission queue 505.

In step S104, the N (N is a natural number of two or more) devices set i = 1.

In step S105, in the i-th time slot of the control data communication duration, the i-th device among the N devices transmits, by multicast, the control data stored in control data transmission queue 504, and the other devices among the N devices receive the control data.

In each time slot, the device to transmit the control data transmits a first communication packet including a first control data group including at least one set of control data and the ID of the control data, and a second communication packet including a second control data group including at least one set of control data and the ID of the control data. The device to receive the control data receives the first communication packet and the second communication packet, and extracts only necessary control data included in these communication packets, based on the IDs included in these communication packets.

When i = N holds in step S106, the process proceeds to step S108 and, when i = N does not hold in this step, the process proceeds to step S107.

In step S107, the N (N is a natural number of two or more) devices increment i. Thereafter, the process proceeds to step S105.

In step S108, at least one of the N devices performs a control protection calculation during the control protection calculation duration included in the control period.

In step S109, during the non-control data communication duration included in the control period, at least one of the N devices specifies a destination and transmits, with best effort, the non-control data stored in non-control data transmission queue 505.

When the control is completed in step S110, the process is ended and, when the control is not completed in the step, the process returns to step S102.

According to the present embodiment, data necessary for a control process for self-excited HVDC for example can be reliably transmitted and received between a plurality of devices within a specified time. Accordingly, the communication between the devices and the control protection calculation process can be completed within one control period, so that the control process can be performed by these devices in a distributed and cooperative manner.

### Embodiment 2.

In the present embodiment, a plurality of control data communication time slots are provided in one control period.

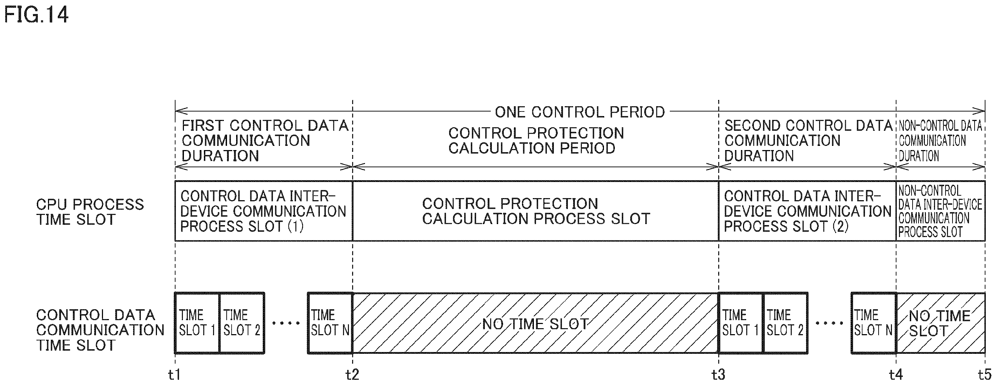

Fig. 14 is a diagram showing a control period according to Embodiment 2.

In the control period, a first control data communication duration of t1 ≤ t < t2, a control protection calculation duration of t2 ≤ t < t3, a second control data communication duration of t3 ≤ t < t4, and a non-control data communication duration of t4 ≤ t < t5 are arranged in order of time from the earliest to the latest. It should be noted that t1 < t2 < t3 < t4 < t5 holds.

In the first control data communication duration, the CPU process time slot is a control data inter-device communication process slot (1). The CPU performs a control data communication process. The first control data communication time slot (1) is a time slot for communication of control data, and is divided into N time slots i (i = 1 to N). In the control protection calculation duration, the CPU process time slot is a control protection calculation process slot. The CPU performs a control protection calculation. The control protection calculation is a process of generating a control voltage command value for controlling the operation of each unit converter or generating a control stop command for protecting each unit converter, for example, based on the current and voltage values of the AC circuit and the DC circuit measured by current and voltage detectors 9A, 9B, 10, 11A, 11B, and 16, and the voltage value or the state value received from each unit converter. In the second control data communication duration, the CPU process time slot is a control data inter-device communication process slot (2). The CPU performs a control data communication process. The second control data communication time slot (2) is a time slot for communication of control data, and is divided into N time slots i (i = 1 to N). In the non-control data communication duration, the CPU process time slot is a non-control data inter-device communication process slot. The CPU performs a non-control data communication process.

In an HVDC control process, a case may arise where a unit converter is required to be stopped (gate block) in a short time, as a result of the control protection calculation. In order to address such a case, the second control data communication time slot (2) in which emergency control data is transmitted is provided after the control protection calculation process slot.

It is supposed that the control data to be transmitted and received in the first control data communication time slot (1) may be input data of the control protection calculation, such as a measurement value (an output voltage measurement value, an output current measurement value, for example) of a unit converter, a control command value (a voltage command value, a current command value, for example) for a unit converter, or a device state (a normal flag, an abnormal flag, error type information, for example) of a unit converter.

It is supposed that the control data to be transmitted and received in the second control data communication time slot (2) may be output data of the control protection calculation, such as a protection command value (gate block of a unit converter, bypass switching of a unit converter, for example), or a trip command for a circuit breaker. The length (t2 - t1) of the first control data communication duration can be made longer than the length (t4 - t3) of the second control data communication duration, in consideration of the assumed data type and size.

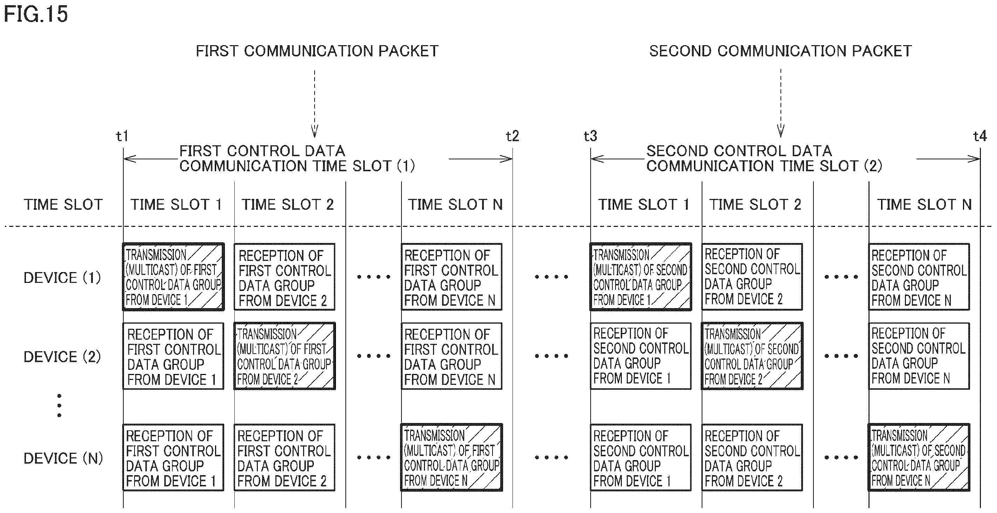

Fig. 15 is a diagram showing communication packets transmitted in a time slot i (i = 1 to N) of the first control data communication time slot (1) and a time slot i (i=1 to N) of the second control data communication time slot (2).

In the time slot i of the first control data communication time slot (1), the i-th device (i) transmits a communication packet by multicast, and the other devices (j) receive the communication packet. Here, i = 1 to N, j = 1 to N, and j ≠ i. The communication packet includes a first control data group from the device (i).

In the time slot i of the second control data communication time slot (2), the i-th device (i) transmits a communication packet by multicast and the other devices (j) receive the communication packet. Here, i = 1 to N, j = 1 to N, and j ≠ i. The communication packet includes a second control data group from the device (i).

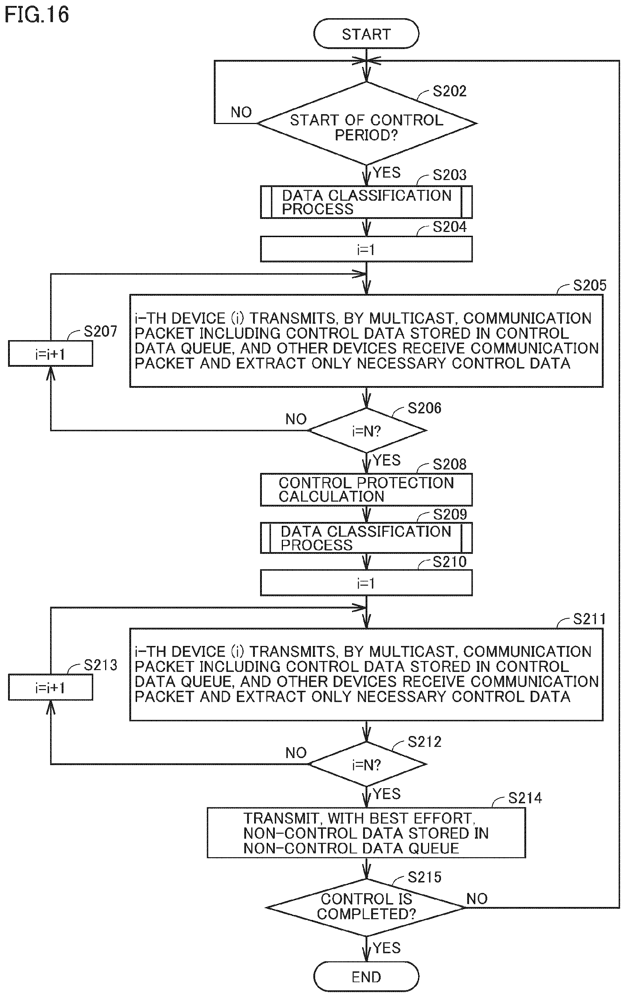

Fig. 16 is a flowchart illustrating a communication procedure for a power conversion system according to Embodiment 2.

It is supposed that devices are synchronized in time with each other at regular time intervals. Specifically, in order to have a control period common to N (N is a natural number of two or more) devices, the N devices are synchronized in time with each other by a time synchronization system such as IEEE 1588 or IEEE 802.1AS.

When the time of the start of the control period is reached in step S202, the process proceeds to step S203.

In step S203, the N devices classify communication data into control data or non-control data based on priority management table 503, during the control data communication duration. The N devices transmit the communication data classified into the control data to control data transmission queue 504, and transmit the communication data classified into the non-control data to non-control data transmission queue 505.

In step S204, the N (N is a natural number of two or more) devices set i = 1.

In step S205, in the i-th time slot of the first control data communication duration, the i-th device among the N devices transmits, by multicast, the control data stored in control data transmission queue 504, and the other devices among the N devices receive the control data.

In each time slot, the device to transmit the control data transmits a first communication packet including a first control data group including at least one set of control data and the ID of the control data. The device to receive the control data receives the first communication packet and extracts only necessary control data included in the first communication packet, based on the ID included in the first communication packet.

When i = N holds in step S206, the process proceeds to step S208 and, when i = N does not hold in this step, the process proceeds to step S207.

In step S207, the N (N is a natural number of two or more) devices increment i. Thereafter, the process proceeds to step S205.

In step S208, at least one of the N devices performs the control protection calculation during the control protection calculation duration included in the control period. In the case where a unit converter is required to be stopped in a short time, for example, appropriate control data is generated.

In step S209, the N devices classify communication data into control data or non-control data based on priority management table 503, during the second control data communication duration. The N devices transmit the communication data classified into the control data to control data transmission queue 504, and transmit the communication data classified into the non-control data to non-control data transmission queue 505.

In step S210, the N (N is a natural number of two or more) devices set i = 1.

In step S211, in the i-th time slot of the second control data communication duration, the i-th device among the N devices transmits, by multicast, the control data stored in control data transmission queue 504, and the other devices among the N devices receive the control data.

In each time slot, the device to transmit the control data transmits a second communication packet including a second control data group including at least one set of control data and the ID of the control data. The device to receive the control data receives the second communication packet and extracts only necessary control data included in the second communication packet, based on the ID included in the second communication packet.

When i = N holds in step S212, the process proceeds to step S214 and, when i = N does not hold in this step, the process proceeds to step S213.

In step S213, the N (N is a natural number of two or more) devices increment i. Thereafter, the process proceeds to step S210.

In step S214, during the non-control data communication duration included in the control period, at least one of the N devices specifies a destination and transmits, with best effort, the non-control data stored in non-control data transmission queue 505.

When the control is completed in step S215, the process is ended and, when the control is not completed in the step, the process returns to step S202.

According to the present embodiment, while the control protection calculation process slot has to be shortened for incorporating the second control data communication time slot (2), as compared with Embodiment 1, control data for emergency can be transmitted and received within the same control period, so that the control response for emergency can be made faster.

### Embodiment 3.

In the present embodiment, the same control data is communicated twice within the control data communication time slot, to thereby achieve both the real-time performance (guaranteed communication time) and the reliability.

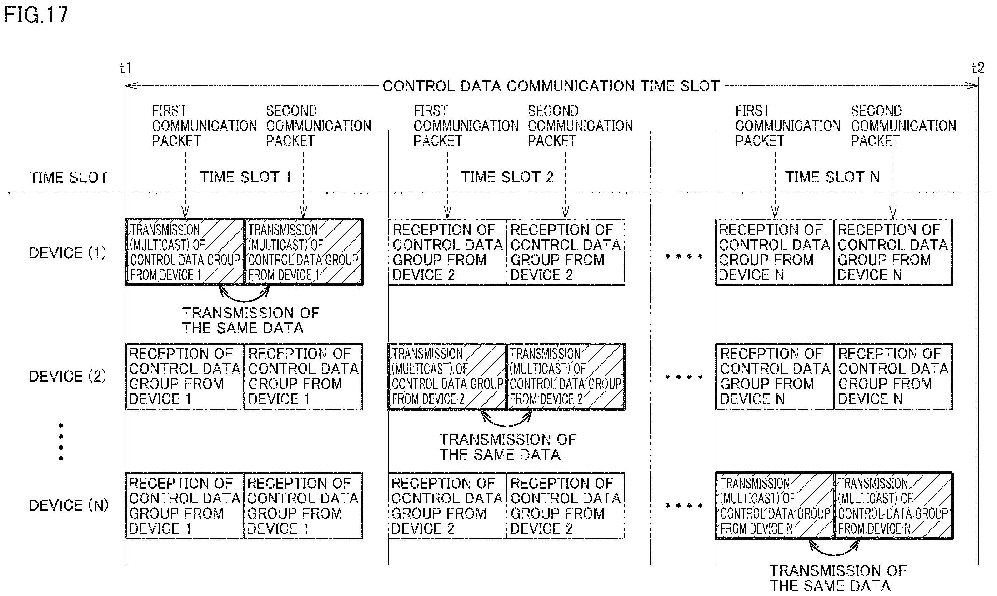

Fig. 17 is a diagram showing communication packets transmitted in a time slot i (i = 1 to N) according to Embodiment 3.

In the time slot i, the i-th device (i) transmits, by multicast, a first communication packet and a second communication packet, and the other devices (j) receive the first communication packet and the second communication packet. Here, i = 1 to N, j = 1 to N, and j ≠ i. The first communication packet and the second communication packet are identical to each other, and each include a control data group from the device (i).

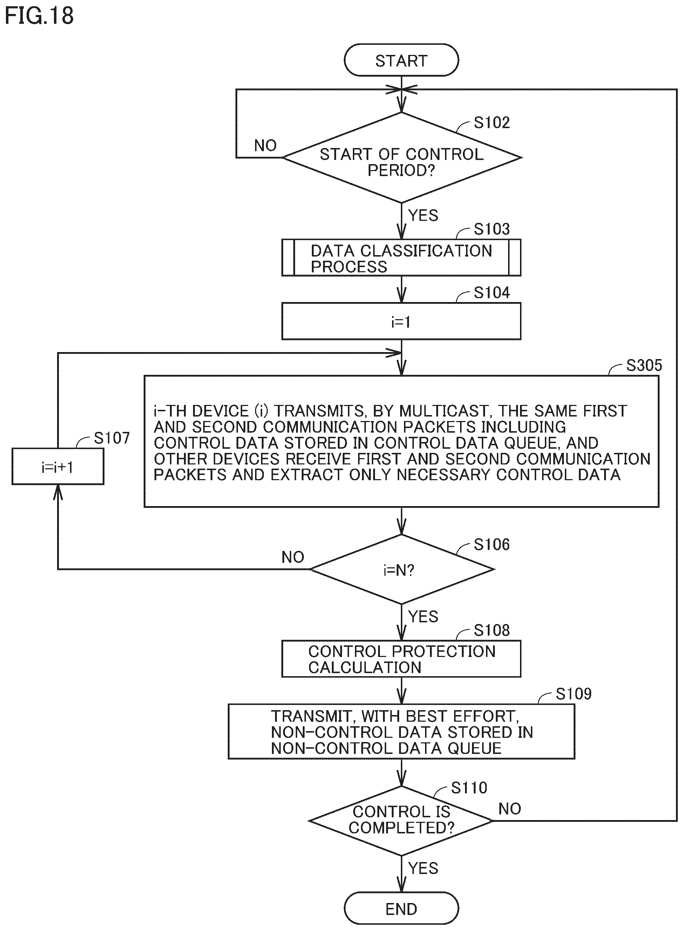

Fig. 18 is a flowchart illustrating a communication procedure for a power conversion system according to Embodiment 3. The flowchart of Fig. 18 differs from the flowchart of Fig. 13 of Embodiment 1, in that the flowchart of Fig. 18 includes step S305 instead of step S105.

In step S305, in the i-th time slot of the control data communication duration, the i-th device among the N devices transmits, by multicast, the control data stored in control data transmission queue 504, and the other devices among the N devices receive the control data.

In each time slot, the device to transmit the control data transmits a first communication packet and a second communication packet each including at least one set of control data and the ID of the control data. The first communication packet and the second communication packet are identical to each other. The device to receive the control data receives the first communication packet and the second communication packet, and extracts only necessary control data included in these communication packets, based on the IDs included in these communication packets.

The receiver device captures data of communication packets without error, and therefore, even if an error occurs during transmission and reception of one of the communication packets, the receiver device can continue the control process by using data from the other communication packet that has been successfully received.

While the communication band per time slot is reduced to a half in the present embodiment, data can be recovered within the same control period when a communication error occurs, so that the reliability of communication of control data can be improved.

It should be noted that the present invention allows the embodiments to be combined freely and each embodiment to be modified or removed appropriately within the scope of the present invention.

It should be construed that the embodiments disclosed herein are given by way of illustration in all respects, not by way of limitation. It is intended that the scope of the present invention is defined by claims, not by the description above, and encompasses all modifications and variations equivalent in meaning and scope to the claims.

### REFERENCE SIGNS LIST

1 power conversion device; 2 power conversion circuitry; 4u, 4v, 4w leg circuit; 5, 6 arm; 7 unit converter; 8A, 8B reactor; 9A, 9B arm current detector; 10 AC voltage detector; 11A, 11B DC voltage detector; 12 AC circuit; 13 interconnection transformer; 14 DC circuit; 16 AC current detector; 20HB conversion circuit; 21 gate controller; 22A, 22B switching device; 23A, 23B diode; 24 DC capacitor; 25 conversion circuit; 26N, 26P input/output terminal; 27 voltage detector; 28 transmission and reception device; 200 converter controller; 300 host controller; 210, 310, 410 HUB; 501 inter-device communication software; 502 communication-control device driver; 503 priority management table; 504 control data transmission queue; 505 non-control data transmission queue; 510A, 510B DC power transmission line; Nn low-potential-side DC terminal; Np high-potential-side DC terminal; Nu, Nv, Nw AC input terminal; SW bypass switch.

## Claims

1. A method for communication between a plurality of devices of a power conversion system, the method for communication comprising:
synchronizing, in time, N devices (N is a natural number of two or more) with each other so as to make a control period common to the N devices, the control period including at least one control data communication duration, the control data communication duration including N time slots; and
a control data communication step in which, in an i-th time slot (i = 1 to N), an i-th device among the N devices transmits control data by multicast and other devices among the N devices receive the control data.

2. The method for communication between a plurality of devices of a power conversion system according to claim 1, the method for communication further comprising:
performing, by at least one of the N devices, a control protection calculation during a control protection calculation duration included in the control period; and
a non-control data communication step in which at least one of the N devices transmits non-control data with best effort, during a non-control data communication duration included in the control period.

3. The method for communication between a plurality of devices of a power conversion system according to claim 2, wherein the control data communication duration, the control protection calculation duration, and the non-control data communication duration are arranged in order of time from earliest to latest in the control period.

4. The method for communication between a plurality of devices of a power conversion system according to claim 2, wherein a first one of the control data communication duration, the control protection calculation duration, a second one of the control data communication duration, and the non-control data communication duration are arranged in order of time from earliest to latest in the control period.

5. The method for communication between a plurality of devices of a power conversion system according to any one of claims 1 to 4, wherein the control data communication step includes a step in which, in each time slot, a device to transmit the control data transmits at least one communication packet including at least one set of the control data and an ID of the control data, and a device to receive the control data receives the communication packet and extracts, based on the ID included in the communication packet, only necessary control data included in the communication packet.

6. The method for communication between a plurality of devices of a power conversion system according to claim 5, wherein the control data communication step includes a step in which, in each time slot, the device to transmit the control data transmits two of the communication packets identical to each other, and the device to receive the control data receives the two of the communication packets identical to each other.

7. The method for communication between a plurality of devices of a power conversion system according to claim 2, wherein
the control data communication step includes:
a step in which, during the control data communication duration, each device refers to a priority management table to classify communication data into control data or non-control data, transmits the communication data classified into the control data to a control data transmission queue, and transmits the communication data classified into the non-control data to a non-control data transmission queue; and
a step in which a device to transmit transmits the control data in the control data transmission queue, and
the non-control data communication step includes a step in which, during the non-control data communication duration, a device to transmit transmits the non-control data in the non-control data transmission queue.

8. A power conversion system comprising:
(N-1) unit converters; and
a converter controller to control the (N-1) unit converters, wherein
the (N-1) unit converters and the converter controller perform the method for communication between a plurality of devices of the power conversion system according to any one of claims 2 to 7.

9. The power conversion system according to claim 8, wherein
the control data transmitted by the converter controller includes a start or stop command for the unit converter, a control synchronization command for the unit converter, and an output voltage command value for the unit converter,
the control data transmitted by the unit converter includes a start or stop state of the unit converter, an output voltage measurement value of the unit converter, and a fact that a device state of the unit converter is an abnormal state, and
the non-control data transmitted by the unit converter includes a fact that a device state of the unit converter is a normal state.

10. A power conversion system comprising:
(N-1) converter controllers each to control a plurality of unit converters; and
a host controller to control the (N-1) converter controllers, wherein
the (N-1) converter controllers and the host controller perform the method for communication between a plurality of devices of the power conversion system according to any one of claims 2 to 7.

11. The power conversion system according to claim 10, wherein
the control data transmitted by the host controller includes a start or stop command for the unit converter, an output voltage command value for the unit converter, and a fact that a device state of the host controller is an abnormal state,
the non-control data transmitted by the host controller includes a fact that a device state of the host controller is a normal state,
the control data transmitted by the converter controller includes an output voltage measurement value of the unit converter, and a fact that a device state of the unit converter is an abnormal state, and
the non-control data transmitted by the converter controller includes a fact that a device state of the unit converter is a normal state.

12. The power conversion system according to claim 10 or 11, wherein
the power conversion system is an HVDC system,
the plurality of unit converters controlled by each of the converter controllers constitute one of power conversion devices, and
two of the power conversion devices are connected by a DC power transmission line.

13. A power conversion system comprising N host controllers each to control a plurality of converter controllers, the plurality of converter controllers are converter controllers to control a plurality of unit converters, wherein
the N host controllers perform the method for communication between a plurality of devices of the power conversion system according to any one of claims 2 to 7.

14. The power conversion system according to claim 13, wherein
the control data transmitted by the host controller includes an operational state of a power conversion station in which the host controller is installed, and a fact that a device state of the power conversion station is an abnormal state, and
the non-control data transmitted by the host controller includes a fact that a device state of the power conversion station is a normal state.
